# EUROPEAN PATENT SPECIFICATION

(11) **EP 3 479 043 B1**
(45) Date of publication and mention of the grant of the patent: **20.05.2020**
(21) Application number: 18730881.2
(22) Date of filing: 16.04.2018
(51) Int. Cl.: F28D 1/04, F28D 1/047, F28F 9/02, F28D 20/02

(54) **THE DEVICE FOR MANUFACTURING AND STORING ICE**
VORRICHTUNG ZUR HERSTELLUNG UND AUFBEWAHRUNG VON EIS
DISPOSITIF DE FABRICATION ET DE STOCKAGE DE GLACE

(30) Priority: 24.04.2017 PL 42139317; 30.03.2018 PL 42509818
(43) Date of publication of application: 08.05.2019
(73) Proprietor: Mar-Bud Spólka Z Ograniczona Odpowiedzialnoscia, 03-262 Warszawa (PL)
(72) Inventor: MlLA, Miroslaw, 41-902 Bytom (PL); SOCZEWKA, Jan, 08-110 Siedlce (PL)
(74) Representative: Bartula-Toch, Marta
(86) International application number: PCT/PL2018/000039
(87) International publication number: WO 2018/199783

(56) References cited:
- EP-A2- 0 987 502
- EP-A2- 2 775 234
- US-A- 6 079 481
- US-A1- 2012 292 004

## Description

The object of the invention is a device for manufacturing and storing ice, used in the cooling systems of industrial equipment, in room air condtioning, in food processing. Ice made from water using a compressor heat pump - in particular at the cost of cheaper electricity at night - it is stored in the device and then during the hours of using the cooling energy used in solid form or in the form of chilled water at a temperature of approximately 6°C, for example in a room air conditioning system.

The device for manufacturing and storing ice known and presented in a Japanese patent specification JPH 08261918 comprises a closed storage tank with thermally insulated walls, with embedded water reservoir having a plurality of separated inner chambers. The chambers are separated by heat exchange units with tubular exchangers, which are mounted horizontally and at intervals above each other. The exchangers of all heat exchange units are made of one tubular flow channel of low-boiling thermodynamic medium, bent in a meandering way at the level of each unit and the ends connected by vertically bent ends with plate heat exchange units adjacent above and below. At the level of each unit, straight sections of the flow channel are connected by a radiator plate. The flow channel of the heat exchange unit is included in the thermodynamic medium circuit of the compressor heat pump which comprises a compressor, a condenser, an expansion valve, an evaporator and the set of valves controlling the change of the flow direction of the thermodynamic medium. When setting the valves directing the flow of the medium to the device working in the thermodynamic circuit as an evaporator, the heat drawn from the water lowers its temperature below the freezing temperature and the water freezes on both sides of the flow channels and radiators of individual units, changing the physical state. After reaching the appropriate thickness of ice forming both on the upper and lower surface of the heat exchange units - by changing the electromagnetic valves built into the heat pump circuit - the flow direction of the thermodynamic medium changes. Compressed medium in the form of a gas at a temperature above 0°C flows through the tubular channels of the device, with the effect of melting the ice on the surfaces of adhesion to the heat exchange units. Detached ice layers float upwards in the individual chambers, successively filling the chambers. In this device ice detachment is supported by the flow of water through the orifices in the radiator plate, located in parallel and in the immediate vicinity of the flow channels. The first layers of ice after detachment and floating upwards remain in the adhesion position to the lower surfaces of the radiator and flow channels - which causes a loss of energy for freezing and detaching the same layer of ice in subsequent cycles. Moreover, the thermodynamic transformation in the long flow channel of serially connected heat exchange units is locally inhomogeneous with the effect of diversification over the length of the channel. Additionally, the ice plates detaching from the bottom of the radiator remain at the place of detachment, which causes them to bond with each other during subsequent freezing cycles forming a block of ice, reducing or even preventing the efficient collection of the accumulated cooling energy.

In the device presented in the patent specification EP 0987502 tubular heat exchange units are immersed in the water reservoir in the inner chambers separated with vertical walls. Each unit has a flow channel shaped like a streamer in the vertical plane and is connected in parallel via the inlet collector and outlet collector to the thermodynamic medium circuit of the heat pump. The streamer of the flow channel in each unit is heat-welded through the vertical plate of the radiator, while the collectors are installed above the water reservoir. During the ice manufacturing phase, when the device is turned on in the evaporator function, icing in the form of ice plates occurs on both sides of the vertical surfaces of the heat exchange units, which cyclically, after reaching a certain thickness are detached by the heat of the medium, after changing the direction of the heat pump's circuit into the operation of the device in the condenser function. Ice plates after de-icing of the units flow up to reach a common level, where they contact the bulges accumulated at the flow channels - reducing the degree of ice filling of the usable capacity of the water reservoir. In addition, this way of arranging the ice plates makes the arrangement accidental. The detached ice plates under the influence of buoyancy tend to be able to bevel in the space between the evaporators, which reduces the degree of filling the tank with ice. Due to the irregular arrangement of the ice plates, the subsequent peel-off plates wedge with the previously detached ones and push out the evaporators, which may lead to damage to the device at the next cycle.

In the devices for manufacturing and storing ice, the geometric similarity of the ice plates manufactured in all heat exchange units is important, which after detachment lifted off in the water bath adhere to each other with surfaces. The homogeneity of temperature conditions over the entire icing surface in all heat exchange units is crucial. In the solution of the harp exchanger as described of the specification US 20120292004 - in order to ensure an even flow of the medium through all flow channels perpendicularly connected to the inlet collector and occurrence of phase transitions of similar intensity therein, affecting the local temperature of the flow channel - a tubular nozzle distributor was installed along the inlet collector. The distributor has nozzle orifices directed coaxially to the flow channels along the side. There is a gap between the nozzle orifices and the orifices of the flow channels in the wall of the inlet collector, in which the swirls of the streams are suppressed. It is important especially for the nozzles in the initial section. The nozzle orifices in the wall of the tubular nozzle distributor have diameters increasing successively from the supply end of the thermodynamic medium. In harp exchangers the phase transition of the thermodynamic medium starts at the inlet collector, passes through the flow channels and ends at the outlet collector- resulting in the temperature differential along the length of the flow channels.

US 6079481 A discloses a device for manufacturing and storing ice, according to the preamble of claim 1. The object of the present invention is to develop a device in which the manufacturing of ice and its storage will be carried out with the lowest possible amount of electric energy and the highest degree of ice filling of the geometric capacity of the water reservoir.

The device according to the invention partially uses the features of known solutions using a heat-insulated storage tank with a water reservoir embedded inside, wherein a plurality of inner chambers are separated by horizontally mounted and spaced apart units with tubular heat exchangers. The heat exchange units are incorporated in parallel in the thermodynamic medium circuit of the heat pump through the inlet collector and the outlet collector, in parallel position and connected through the perpendicular tubular flow channels and which are heat-welded together by the plate of the radiator. The tubular nozzle distributor is inserted longitudinally to the inside of the inlet collector. The device is incorporated in the heat pump circuit comprising the valve assembly controlling the flow direction of the thermodynamic medium.

The invention is distinguished by the particular design of the heat exchange unit. Each heat exchange unit consists of two identical heat exchangers incorporated in parallel in the heat pump circuit of the exchangers. The exchangers have the final sections of the flow channel connections to the outlet collector bent off the radiator plane, which determine straight sections of the flow channels coming out from the inlet collector. The deflection has a dimension greater than half the sum of the outside diameters of the inlet and outlet collectors, the heat exchangers being superimposed so that the straight long sections of their flow channels are alternating with each other in the plane of the radiator. The inlet collectors in both heat exchangers are located above the outlet collectors. The tubular nozzle distributor, having many nozzle orifices on the side, directed coaxially to the flow channels, and whose diameters increase successively from the end of the thermodynamic medium supply is inserted longitudinally to the inside of each inlet collectors

It is preferred when each heat exchange unit has an inter-collector insulating strip inserted between the vertically adjacent inlet collector and the outlet collector in both exchangers and above that when the surface between the outlet collectors in both heat exchangers is covered from the bottom by a counter-plate made of waterproof material with a low thermal conductivity coefficient. The counter-plate adheres to the entire surface of the flow channels and the radiator plate.

It is also expedient to realize a device in which - in both exchangers of each heat exchange unit - areas of vertically adjacent inlet collector and outlet collector pairs are covered by longitudinally waterproof, edge thermal insulation.

In the device according to the invention, each of the inner chambers is separated by horizontally arranged heat exchange units with a structure ensuring a homogeneous temperature distribution over the entire heat exchange surface. The preferred temperature effect results from the superimposition of two same tubular heat exchangers with a harp system, with opposite directed flows of the medium in alternately adjacent flow channels of both heat exchangers connected in parallel with the heat pump's thermodynamic medium circuit and which in one plane are connected by the common plate of the radiator covered with a thermal insulation counter-plate from the bottom. Local compensation of the amount of heat transmitted unidirectionally to the upper surface of the radiator by adjacent, counter-current, quantitatively equal streams of the media- being in the phases of physical transition with a constant parameter difference - is essential for the production efficiency of flat ice plates and storage capacity. De-icing phase as a result of unidirectional heat directed upwards is shortened only until the thin ice sheet is melted, which then flows upward under the insulated counter-plate of the heat exchange unit of the upper inner chamber. One can also point out to the oil drip effect preferred for the operation of the device through the final sections of the flow channels bent towards the outlet collectors, oil introduced by the compressor to the thermodynamic medium. This arrangement of the heat exchange units results in the homogeneous arrangement of the detached ice plates in the spaces between the units which, after floating up, do not freeze to the heat exchange unit located above. Counter-current system of the exchangers in the units causes that the ice plates have an even thickness over the entire surface, which facilitates their regular flow and laying in the spaces between the heat exchange units. The design of the heat exchange unit with a surface radiator and pipes arranged in one-sided radiator extrusions causes the ice plate to have a one-sidedly wavy shape, which substantially increases the efficiency of discharging the chiller because it allows free flow of water between the ice plates.

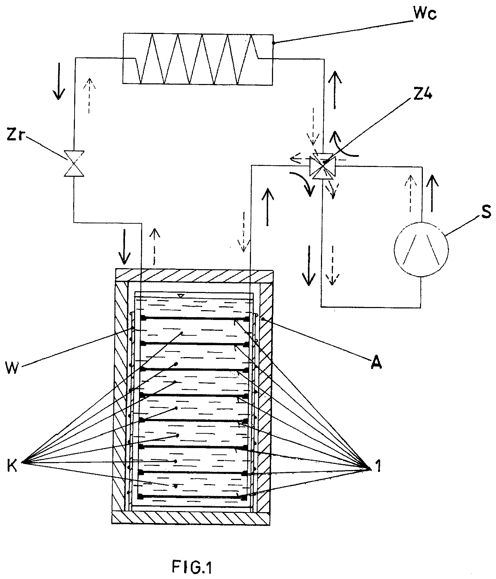

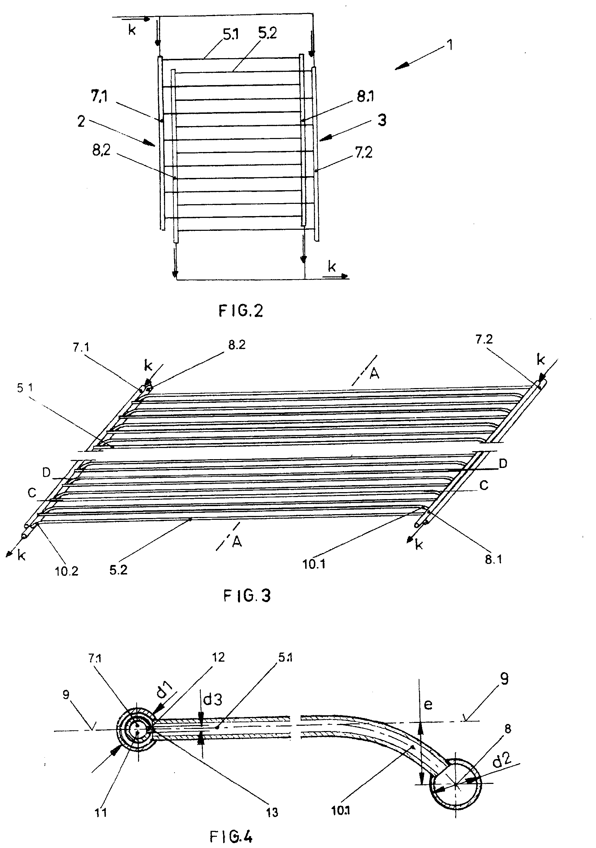

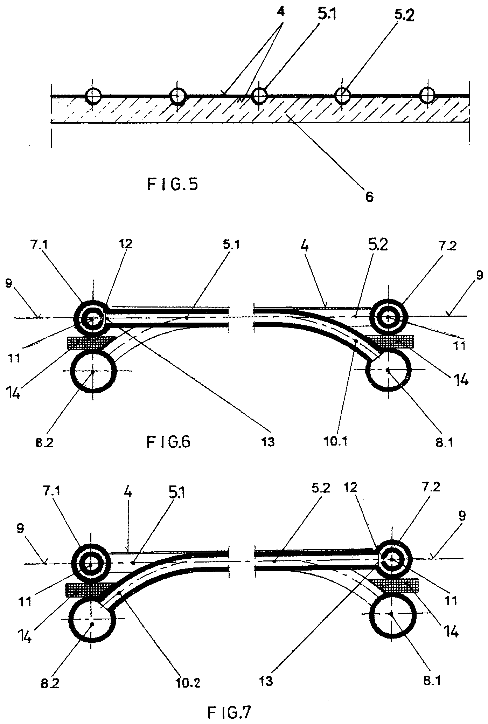

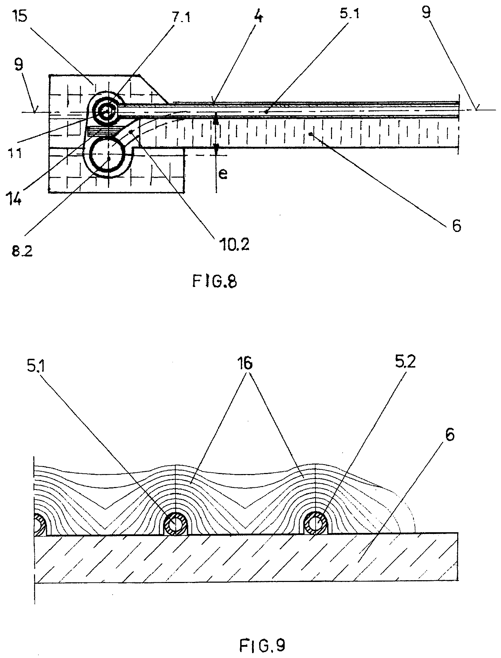

The solution of the device according to the invention is approximated by a description of an exemplary embodiment shown in the drawing, the individual figures of which show: Fig. 1 - general diagram of the device with the systems of connections with the remaining heat pump units, Fig.2 - diagram of the heat exchange unit, Fig.3 - unit in a perspective view, Fig.4 - vertical cross-section through the axis of the flow channel of the first exchanger, Fig.5 - the middle section of a vertical cross-section of an exemplary embodiment of a heat exchange unit according to a line A-A of Fig.3, Fig.6 - vertical cross-section of the unit according to a line C-C of Fig.3 through the axis of the flow channel of the first heat exchanger, Fig.7 - vertical cross-section of the unit according to a line D-D of Fig.3 through the axis of the flow channel of the second heat exchanger, Fig.8 - vertical cross-section of the left side of the heat exchange unit, with a counter-plate and edge thermal insulation and Fig.9 a fragment depicting the formation of ice on the heat exchange unit.

The device for manufacturing and storing ice according to the invention, for example, can be used as a source of chilled water at a temperature of approximately 6°C, safe for the environment in the event of a leak. Ice made from water at night at the cost of cheaper electricity is stored in the device and then the cooling energy contained therein used during operating hours of the air conditioning installation. The device is embedded in the thermodynamic medium circuit of the heat pump composed of interconnected compressor "S", the heat exchanger "Wc", the expansion valve "Zr" and the device according to the invention. Depending on the direction of flow of the thermodynamic medium determined by the valve unit "Z4", the device works in the phase of ice manufacturing as an evaporator and during de-icing in the condenser function. The device comprises a closed, a heat-insulated storage tank "A" with a water reservoir "W" embedded inside having a plurality of inner chambers "K", separated by heat exchange units 1 horizontally mounted and at intervals above each other. Each heat exchange unit 1 consists of two tubular heat exchangers: first 2 and second 3, incorporated in parallel in the thermodynamic medium circuit. The exchangers 2 and 3 have parallel inlet collectors 7.1 and 7.2 and outlet collectors 8.1 and 8.2 and are connected through the perpendicular tubular flow channels 5.1 and 5.2. The outlet collectors 8.1 and 8.2 are located below the axis level of the inlet collectors 7.1 and 7.2 by a dimension "e" greater than half the sum of the outside diameters "d1" and "d2" of the inlet 7.1, 7.2 and outlet 8.1, 8.2 collector. With such arrangement the final sections 10.1 and 10.2 of the flow channel connections 5.1 and 5.2 to the outlet collector 8.1 and 8.2 are deflected from the straight long sections of the flow channels 5.1 and 5.2 coming out from the inlet collector 7.1, 7.2. The heat exchangers 2 and 3 are superimposed so that their straight long sections of the flow channels 5.1 and 5.2 are alternating with each other in one plane 9-9 and are heat-bonded to one common plate of the radiator 4. Inlet collectors 7.1 and 7.2 in both heat exchangers 2 and 3 are arranged above the outlet collectors 8.1 and 8.2 and the inter-collector insulating strips 14, eliminating the possibility of heat exchange are introduced into the gaps in-between them. The tubular nozzle distributor 11, having many nozzle orifices 12 on the side, directed coaxially to the flow channels 5 is inserted longitudinally to the inside of the inlet collectors 7.1 and 7.2. The diameters d3 of the nozzle orifices 12 increase successively from the end of the thermodynamic medium supply. The surface between the outlet collectors 8.1 and 8.2 of both exchangers 2 and 3 is covered from the bottom by a counter-plate 6 made of waterproof material, with a low thermal conductivity coefficient. Grooves for the flow channels 5.1 and 5.2 are performed in the counter-plate 6, which allows the counter-board 6 to adhere to the entire surface of the flow channels 5.1 and 5.2 and to the plate of the radiator 4. In each heat exchange unit 1 the areas of vertically adjacent pairs of the inlet collector 7.1 and 7.2 and outlet collector 8.2 and 8.2 are longitudinally covered by the waterproof, edge thermal insulation 15.

The operation of the device depends on the flow direction of the thermodynamic medium in the heat pump circuit, the direction which determines the position of the four-way valve "Z4". In the ice manufacturing phase, the device works as an evaporator with the flow direction of the medium indicated in the diagram of Fig.1 with arrows with a solid line, for the de-icing phase the direction is indicated by arrows with a dashed line. In both phases it is obvious that it is necessary to maintain a constant flow of the thermodynamic medium in the gas form through by the compressor "Sp". In the ice manufacturing phase, compressed gas thermodynamic medium is directed from the compressor "S" to the heat exchanger "Wc", where it condenses. Then, after passing through the expansion valve, "Zr" it is supplied to heat exchange units 1 in the device according to the invention, which operates as an evaporator. The evaporation of the medium is accompanied by the removal of heat from the water, which turns into ice 16 in the radiators 4. Further, already in gaseous form, the medium flows through the four-way valve "Z4" sucked in by the compressor "S". In the de-icing phase the compressed medium at a temperature of about 35°C is directed by the four-way valve "Z4" to the heat exchange units 1 of the device, where as a result of condensation it gives off heat by heating the plates of the radiator 4 while detaching the ice plates.

As the ice thickness increases, the rate of ice layers build-up on the radiator 4 decreases - which is accompanied by the pressure drop in the suction line of the compressor "Sp". The change of the operating phases of the device is made by the control system not shown in the diagram of Fig. 1, which can determine the optimal moment of changing the setting of the four-way valve "Z4" on the basis of the vacuum value in the suction line. The value of the vacuum for overloading the four-way valve "Z4" should be correspondingly higher than the limit, lower suction pressure indicated by the manufacturer of the compressor.

### List of indications in the figure

- A.: storage tank
- W.: water reservoir
- K: inner chamber
- S: compressor
- Z4: four-way valve
- Wc: heat exchanger
- Zr: expansion valve

- 1.: heat exchange unit
- 2.: first heat exchanger
- 3.: second heat exchanger
- 4.: plate of the radiator
- 5.: flow channels
5.1 flow channels of the first exchanger
5.2 flow channels of the second exchanger
- 6.: counter-plate
- 7.: inlet collector
7.1 inlet collector of the first exchanger
7.2 inlet collector of the second exchanger
- 8.: outlet collector
8.1 outlet collector of the first exchanger
8.2 outlet collector of the second exchanger
- 9-9: radiator plane
- 10.: flow channel final section
10.1 flow channel final section of the first exchanger
10.2 flow channel final section of the second exchanger
- 11.: tubular nozzle distributor
- 12.: nozzle orifice
- 13.: flow channel inlet
- 14.: inter-collector insulating strip
- 15.: edge thermal insulation
- 16.: ice

- e.: the dimension of the inlet collector offset relative to the outlet collector
- d1.: outside diameter of the inlet collector
- d2.: outside diameter of the outlet collector
- d3.: diameter of the nozzle orifice
- k.: the flow direction of the thermodynamic medium

## Claims

1. A **device for manufacturing and storing ice,** in particular for cooling and air-conditioning systems, comprising a closed heat-insulated storage tank (A) with a water reservoir (W) embedded inside having a plurality of inner chambers (K), separated by heat exchange units (1) horizontally mounted and at intervals above each other with tubular heat exchangers (2, 3) each for being incorporated in parallel in a thermodynamic medium circuit of a heat pump through an inlet collector (7) and an outlet collector (8), in parallel position and connected through perpendicular tubular flow channels (5) heat-welded together by a plate of a radiator (4), wherein the device is incorporated in a heat pump circuit (S, Wc, Zr) comprising a valve assembly (Z4) controlling the flow direction of the thermodynamic medium, **characterized in that** each heat exchange unit (1) consists of two identical heat exchangers incorporated in parallel in the heat pump circuit (S, Wc, Zr) of the exchangers (2, 3) having final sections (10.1, 10.2) of flow channel connections (5.1, 5.2) to the outlet collector (8.1, 8.2) bent off the radiator plate (9-9) - determined by long, straight sections of the flow channels (5.1, 5,2) coming out from an inlet collector (7.1, 7.2) - by a dimension (e) greater than half the sum of the outside diameters (d1, d2) of the inlet (7.1, 7.2) and outlet (8.1, 8.2) collector, the heat exchangers (2, 3) being superimposed so that straight long sections of the flow channels ( 5.1, 5.2) alternate with each other in the plane of the radiator (9-9) and the inlet collectors (7.1, 7.2) in both heat exchangers (2, 3) are arranged above the outlet collectors (8.1, 8.2), wherein a tubular nozzle distributor (11), having many nozzle orifices (12) on the side, directing coaxially to the flow channels (5), and whose diameters (d3) increase successively from the end of the thermodynamic medium supply is inserted longitudinally to the inside of each inlet collectors (7.1, 7.2).

2. **A device** according to claim 1 **characterized in that** each heat exchange unit (1) has an inter-collector insulating strip (14) inserted between the vertically adjacent inlet collector (7.1, 7.2) and the outlet collector (8.1, 8.2) in both exchangers (2, 3) and moreover, the surface between the outlet collectors (8.1, 8.2) in both heat exchangers (2, 3) is covered from the bottom by a counter-plate (6) made of waterproof material with a low thermal conductivity coefficient and it adheres to the flow channels (5.1, 5.2) and to the plate of the radiator (4).

3. **A device** according to claim 1 or 2 **characterized in that** in both exchangers (2, 3) of each heat exchange unit (1) the areas of vertically adjacent pairs of the inlet collector (7.1, 7.2) and outlet collector (8.2, 8.1) are longitudinally covered by a waterproof, edge thermal insulation (15).

## Patentansprüche

1. Eisherstellungs- und Lagereinheit, insbesondere für Kühl- und Klimaanlagen, mit einem geschlossenen, wärmeisolierten Lagertank (A), in dem ein Wasserreservoir (W) untergebracht ist, mit mehreren Innenkammern (K), die durch Wärmeaustauscheinheiten (1) mit horizontal und in Abständen übereinander angeordneten Rohrwärmeaustauschern (2, 3) getrennt sind, wovon jede Einheit parallel an den Kreislauf des thermodynamischen Mediums der Wärmepumpe durch den Einlassverteiler (7) und den Auslassverteiler (8) angeschlossen ist, die parallel angeordnet und durch senkrechte Strömungskanäle (5) verbunden sind, die durch eine Heizkörperplatte (4) thermisch miteinander verbunden sind, über die hinaus mit dem Inneren jedes Einlassverteilers (7.1, 7.2) verbunden sind, ist ein längsgerichteter rohrförmiger Düsenverteiler (11) eingesetzt, der an seiner Seite viele koaxial zu den Strömungskanälen (5) gerichtete Düsenlöcher (12) aufweist und dessen Durchmesser (d3) vom Ende der thermodynamischen Mediumzufuhr an sukzessive zunehmen, wobei die Vorrichtung in den Wärmepumpenkreislauf (S, Wc, Zr), die eine Ventileinheit (Z4) zur Steuerung der Strömungsrichtung des thermodynamischen Mediums enthält, **dadurch gekennzeichnet ist, dass** jede Wärmeaustauscheinheit (1) aus zwei gleichen Wärmeaustauschern (S, Wc, Zr) besteht, die gleichzeitig in den Wärmepumpenkreislauf (S, Wc, Zr) eingebunden sind und die Endabschnitte (10.1, 10.2) Strömungskanäle (5.1, 5.2) Verbindungen zum Auslassverteiler (8.1, 82), die aus der Ebene des Heizkörpers (9-9) gebogen sind - bestimmt durch die geraden Abschnitte der Strömungskanäle (5.1, 5.2), die aus dem Einlassverteiler (7.1, 7.2) herauskommen - um das Maß (e) größer als die Hälfte der Summe der Außendurchmesser (d1, d2) der Einlass- (7.1, 7.2) und Auslassverteiler (8.1, 8.2), wobei sich die Wärmeaustauscher (2, 3) so überlappen, dass ihre geraden, langen Strömungskanalabschnitte (5.1, 5.2) in der Ebene des Heizkörpers (9-9) abwechselnd nebeneinander angeordnet sind und durch eine gemeinsame Heizkörperplatte (4) und die Einlassverteiler (7.1, 7. 2) in beiden Wärmeaustauschern (2, 3) über den Auslassverteilern (8.1, 8.2) angeordnet sind, über den Düsenverteilern (11) des ersten (2) und zweiten Wärmeaustauschers (3) in die benachbarten Enden beider Einlassverteiler (7.1, 7.2) eingebaut sind.

2. Die Vorrichtung nach Patentanspruch 1 ist **dadurch gekennzeichnet, dass** jede Wärmeaustauscheinheit (1) einen Zwischenkollektor-Isolierstreifen (14) aufweist, der zwischen dem vertikal benachbarten Einlassverteiler (7.1, 7.2) und dem Auslassverteiler (8.1, 8.2) in beiden Wärmeaustauschern (2, 3) eingefügt ist; darüber hinaus wird die Fläche zwischen den Auslassverteiler (8.1, 8.2) in beiden Wärmeaustauschern (2, 3) von unten durch eine Platte (6) aus wasserdichtem Material mit niedrigem Wärmeleitfähigkeitskoeffizienten abgedeckt, die an den Strömungskanälen (5.1, 5.2) und an der Kühlkörperplatte (4) haftet.

3. Die Vorrichtung nach Patentanspruch 1 oder 2 ist **dadurch gekennzeichnet, dass** in beiden Wärmeaustauschern (2, 3) jeder Wärmeaustauscheinheit (1) die Zonen von vertikal benachbarten Paaren von Einlassverteiler (7.1, 7.2) und Auslassverteiler (8.1, 8.2) mit einer längswasserdichten Randwärmedämmung (15) abgedeckt sind.

## Revendications

1. Dispositif pour la production et le stockage de glace, en particulier pour les systèmes de refroidissement et de climatisation, contenant un réservoir d'accumulation fermé et isolé thermiquement (A) dans lequel un réservoir d'eau (W) avec des nombreuses chambres internes (K) séparées par - montées horizontalement et espacées les unes sur les autres - systèmes d'échange de chaleur (1) avec des échangeurs de chaleur tubulaires (2, 3), dont chaque système est connecté en parallèle au circuit du facteur thermodynamique de la pompe à chaleur à travers du collecteur d'admission (7) et du collecteur d'échappement (8), situés en parallèle et reliés par des canaux d'écoulement tubulaires (5) soudés thermiquement par la plaque du radiateur (4), dans lequel le distributeur de buse tubulaire (11) est inséré longitudinalement dans chaque collecteur d'admission (7.1, 72) ayant une pluralité des trous de buse (12) dirigés coaxialement sur la surface latérale aux canaux d'écoulement (5) et dont les diamètres (d3) augmentent successivement à partir de l'extrémité alimentation du facteur thermodynamique, par lequel le dispositif est inclus dans le circuit de pompe à chaleur (S, Wc, Zr) contenant l'ensemble de soupape (Z4) contrôlant la direction du flux du facteur thermodynamique, **caractérisé en ce que** chaque système d'échange de chaleur (1) se compose de deux éléments identiques et des échangeurs de chaleur (2, 3) parallèlement connectés au circuit de pompe à chaleur (S,Wc, Zr) ayant des sections finales(10.1, 10.2) des canaux d'écoulement (5.1, 5.2) des connexions au collecteur d'échappement (8.1, 8.2) courbés depuis le plan du radiateur (9-9) - déterminé par des sections droites des canaux d'écoulement dérivés du collecteur d'admission (7.1, 7.2) - par une dimension (e) supérieure à la moitié de la somme des diamètres extérieurs (d1, d2) des collecteurs d'admission (7.1, 7.2) et d'échappement (8.1, 8.2), les échangeurs de chaleur (2, 3) étant superposés de manière à ce que leurs longues sections droites des canaux d'écoulement (5.1, 5.2) soient alternativement adjacentes les unes aux autres dans le plan du radiateur (9-9) et sont joints par une plaque de radiateur commune (4) et les collecteurs d'admission (7.1, 7.2) dans les deux échangeurs de chaleur (2, 3) sont situés au-dessus des collecteurs d'échappement (8.1, 8.2), au-dessus de celui des distributeurs de buses (11) du premier (2) et du deuxième échangeur (3) sont intégrés aux extrémités adjacentes des deux collecteurs d'admission (7.1, 7.2).

2. Dispositif selon la revendication 1, **caractérisé en ce que** chaque système d'échange de chaleur (1) a une bande isolante intercollectrice(14) insérée entre le collecteur d'admission (7.1, 7.2) et le collecteur d'échappement verticalement adjacents (8.1, 8.2) dans les deux échangeurs (2, 3), en outre, la surface entre les collecteurs d'échappement (8.1, 8.2) dans les deux échangeurs (2, 3) est couverte par le bas par l'anti-plaque (6) en matériau étanche, ayant un faible coefficient de conductivité thermique et qui est adjacente aux canaux d'écoulement (5.1, 5.2)) et à la plaque du radiateur (4).

3. Dispositif selon la revendication 1 ou 2, **caractérisé en ce que** dans les deux échangeurs de chaleur (2, 3) de chaque système d'échange de chaleur (1), les zones des paires verticalement adjacentes de collecteur d'admission (7.1, 7.2) et de collecteur d'échappement (8.1, 8.2) sont couvertes longitudinalement par l'isolation thermique imperméable de bord (15).
